# EUROPÄISCHE PATENTANMELDUNG

(11) **EP 1 087 280 A2**
(43) Veröffentlichungstag der Anmeldung: **28.03.2001**
(21) Anmeldenummer: 00120386.8
(22) Anmeldetag: 18.09.2000
(51) Int. Cl.: G05B 19/418

(54) **Verfahren zur Ermittlung eines fehlerhaften Werkzeuges in einer Produktionsstrasse sowie Produktionsstrasse dazu**

(30) Priorität: 24.09.1999 AT 65899; 10.02.2000 AT 2062000
(71) Anmelder: Fa. NAMAR'S Trade Consulting & Engineering Dipl.-Ing. Omar Nammari KEG, A-1810 Wien (AT)
(72) Erfinder: Taha, Abdel Azis, 1100 Wien (AT)

(57) **Zusammenfassung**

Bei einem Verfahren zur Ermittlung eines fehlerhaften Werkzeuges in einer Produktionsstraße (1) mit wenigstens zwei Stationen (3,4) wird so vorgegangen, daß die Stationen jeweils eine voneinander verschiedene Anzahl von jeweils gleichen Werkzeugen (5,6,7,10,11) aufweisen, daß mittels wenigstens einer Prüfeinrichtung (12) eine Qualitäts- bzw. Funktionskontrolle vorgenommen wird, daß bei Auftreten von fehlerhaften Werkstücken die an der Produktion dieser Werkstücke beteiligten Werkzeuge sowie deren Häufigkeiten ermittelt werden und daß durch Vergleich der ermittelten Verteilung der Häufigkeiten mit gespeicherten Häufigkeitsverteilungen auf das fehlerhafte Werkzeug geschlossen wird.

Die Produktionsstraße weist wenigstens zwei Stationen mit Werkzeugen für die Produktion eines Werkstückes und wenigstens einer Prüfeinrichtung für fehlerhafte Werkstücke auf, wobei die einer Prüfeinrichtung vorangehenden Stationen jeweils eine voneinander verschiedene Anzahl von jeweils gleichen Werkzeugen aufweisen und die Prüfeinrichtung mit einer Auswerteschaltung verbunden ist, welche jedem Werkstück die an seiner Produktion beteiligten Werkzeuge zuordnet.

## Beschreibung

Die Erfindung betrifft ein Verfahren zur Ermittlung eines fehlerhaften Werkzeuges in einer Produktionsstraße mit wenigstens zwei Stationen sowie eine Produktionsstraße mit wenigstens zwei Stationen mit Werkzeugen für die Produktion eines Werkstückes und wenigstens einer Prüfeinrichtung für fehlerhafte Werkstücke, sowie die Verwendung einer Zähleinrichtung im Rahmen einer derartigen Produktionsstraße.

Für die Effizienz einer Produktionsstraße ist es von großer Bedeutung, daß Ausfälle von Werkzeugen oder Maschinen vermieden bzw. fehlerhafte Werkzeuge oder Maschinen rasch erkannt werden. Zu diesem Zwecke werden in der Praxis verschiedene Instandhaltungsstrategien angewendet. Bei der vorbeugenden Instandhaltung sind regelmäßige Instandhaltungsarbeiten notwendig, was naturgemäß einen hohen Arbeits- und Arbeitszeitaufwand bedingt. Zur Vorbeugung von Maschinenausfällen werden Produktionswerkzeuge auch mit aufwendigen Diagnosesystemen ausgestattet, welche die für einen Ausfall einer Maschine charakteristischen Parameter ständig erfassen und bei Unterschreiten bestimmter Grenzwerte bzw. bei Erkennen eines Trends ein Signal geben. Solche Diagnosesysteme erfordern jedoch aufwendige Schaltungen und erhebliche Investitionskosten. Bei der ausfallsorientierten Instandhaltung wird auf Diagnosesysteme verzichtet und eine Instandsetzungsmaßnahme wird immer erst dann vorgenommen, wenn eine Maschine auch tatsächlich ausgefallen ist. Diese Art der Instandhaltung bringt geringe Instandhaltungskosten, jedoch hohe Ausfallskosten mit sich. In der Praxis wird hinsichtlich einer Optimierung von Instandhaltungs- und Ausfallskosten oft eine Kombination aus vorbeugender und ausfallsorientierter Instandhaltung angewendet.

Für die Effizienz einer schwerpunktsmäßig ausfallsorientierten Instandhaltung ist es entscheidend, daß das fehlerhafte Werkzeug rasch erkannt wird, sodaß unmittelbar entsprechende Instandsetzungsmaßnahmen eingeleitet bzw. das fehlerhafte Werkzeug aus der Produktionsstraße ausgegliedert werden kann. Zur Identifizierung eines ausgefallenen bzw. fehlerhaften Werkzeuges ist es, wie bereits erwähnt, vorgeschlagen worden, Maschinen mit aufwendigen und kostspieligen Diagnosesystemen auszustatten. Alternativ können fehlerhafte Werkzeuge auch dadurch ermittelt werden, daß das Werkstück nach jedem einzelnen Produktionsschritt einer Prüfung unterzogen wird, sodaß das Erkennen eines fehlerhaften Werkstückes unmittelbar auf den Ausfall bzw. eine Funktionsstörung des vorhergehenden Werkzeuges schließen läßt. Bei dieser Art der Ausfallsprüfung ist jedoch eine hohe Anzahl an gesonderten Prüfeinrichtungen notwendig und der damit verbundene Aufwand ist erheblich.

Aufgabe der vorliegenden Erfindung ist es, ein Verfahren zur Ermittlung eines fehlerhaften Werkzeuges der eingangs genannten Art bzw. eine Produktionsstraße der eingangs genannten Art zu schaffen, welche ohne aufwendige Diagnosesysteme auskommt und bei der es möglich ist, unter Verwendung einer minimalen Anzahl von einfachen Prüfeinrichtungen in eindeutiger Weise auf das fehlerhafte bzw. ausgefallene Werkzeug zu schließen. Zur Lösung dieser Aufgabe besteht das erfindungsgemäße Verfahren im wesentlichen darin, daß die Stationen jeweils eine voneinander verschiedene Anzahl von jeweils gleichen Werkzeugen aufweisen, daß mittels wenigstens einer Prüfeinrichtung eine Qualitäts- bzw. Funktionskontrolle vorgenommen wird, daß bei Auftreten von fehlerhaften Werkstücken die an der Produktion dieser Werkstücke beteiligten Werkzeuge sowie deren Häufigkeiten ermittelt werden und daß durch Vergleich der ermittelten Verteilung der Häufigkeiten mit gespeicherten Häufigkeitsverteilungen auf das fehlerhafte Werkzeug geschlossen wird. Dadurch, daß die Stationen jeweils eine voneinander verschiedene Anzahl von jeweils gleichen Werkzeugen aufweisen, wird die Voraussetzung geschaffen, daß die von einer Prüfeinrichtung vorgenommene beliebig einfach Qualitäts- bzw. Funktionskontrolle gemeinsam mit der nachfolgenden Auswertung einen eindeutigen Schluß auf das fehlerhafte Werkzeug zuläßt. Unter einem Werkzeug ist im Sinne der vorliegenden Erfindung jedes am Produktionsprozeß direkt oder indirekt beteiligte und einen Verfahrensschritt durchführende Element zu verstehen, z.B. Maschinen, Roboter, Manipulatoren, Fördereinrichtungen, Übertragungsmedien oder dgl. Dadurch, daß in einer Produktionsstation nicht nur ein einziges Werkzeug angeordnet ist, sondern eine Mehrzahl von gleichen Werkzeugen, welche abwechselnd zur Durchführung des gleichen Produktionsschrittes eingesetzt werden, wird neben der eindeutigen Ermittlung des fehlerhaften Werkzeuges auch der Vorteil erreicht, daß bei Ausfall eines einzigen Werkzeuges nicht die gesamte Produktionsstraße abgeschaltet werden muß. Da ja noch weitere gleichartige Werkzeuge in der selben Station zur Verfügung stehen, kann der Produktionsprozeß mit entsprechend herabgesetztem Arbeitstakt fortgesetzt werden. Die zusätzlichen Investitionskosten zur Anschaffung mehrerer gleichartiger Werkzeuge werden dabei durch die insgesamt längere Lebensdauer aufgewogen

Dadurch, daß bei Auftreten von fehlerhaften Werkstücken die an der Produktion dieser Werkstücke beteiligten Werkzeuge sowie deren Häufigkeiten ermittelt werden, und daß durch Vergleich der ermittelten Verteilung der Häufigkeit mit gespeicherten Häufigkeitsverteilung auf das fehlerhafte Werkzeug geschlossen wird, werden nur geringe Anforderungen an die Auswerteschaltung gestellt. Im einfachsten Fall kann eine solche Auswerteschaltung lediglich aus einer Zähleinrichtung bestehen, welche bei Auftreten eines fehlerhaften Produktes von der Prüfeinrichtung ausgehend entgegen der Produktionsrichtung die Vorschubtakte rückzählt und so die einzelnen an der Produktion des fehlerhaften Werkstückes beteiligten Werkzeuge ermittelt. Nach einer entsprechenden Anzahl von als fehlerhaft erkannten Produkten ergibt sich eine charakteristische Verteilung der Häufigkeiten der an der Produktion der jeweiligen Produkte beteiligten Werkzeuge, welche in eindeutiger Weise auf ein bestimmtes fehlerhaftes Werkzeug schließen läßt.

Für das erfindungsgemäße Verfahren kann eine einfache Prüfeinrichtung Verwendung finden, da es bei der Qualität- bzw. Funktionskontrolle nicht darauf ankommt festzustellen, welcher Defekt aufgetreten ist, sondern nur die Tatsache, daß ein Defekt überhaupt aufgetreten ist. Die Prüfeinrichtung kann somit in eine konventionelle Qualitätskontrolle, wie sie in fast jeder Produktionsstraße vorhanden ist, integriert werden. Für die Anordnung der Prüfungseinrichtung ist lediglich zu beachten, daß die einer Prüfeinrichtung vorangehenden Stationen jeweils eine voneinander verschiedene Anzahl von jeweils gleichen Werkzeugen aufweisen.

Zur Lösung der erfindungsgemäßen Aufgabe wird weiters eine Produktionsstraße vorgeschlagen, welche dadurch gekennzeichnet ist, daß die einer Prüfeinrichtung vorangehenden Stationen jeweils eine voneinander verschiedene Anzahl von jeweils gleichen Werkzeugen aufweisen und daß die Prüfeinrichtung mit einer Auswerteschaltung verbunden ist, welche jedem Werkstück die an seiner Produktion beteiligten Werkzeuge zuordnet. In vorteilhafter Weise ist die Produktionsstraße so weitergebildet, daß der Auswerteschaltung ein erster Speicher zugeordnet ist, in welchem die Häufigkeiten und die Häufigkeitsverteilung von an als fehlerhaft erkannten Werkstücken beteiligten Werkzeugen abgelegt sind, daß ein zweiter Speicher vorgesehen ist, in welchem für den Ausfall jedes Werkzeuges jeweils eine charakteristische Häufigkeitsverteilung gespeichert ist, und daß eine Komparator mit dem ersten und dem zweiten Speicher verbunden ist, welcher bei Übereinstimmung der im ersten Speicher abgelegten Häufigkeitsverteilung mit einer der im zweiten Speicher gespeicherten Häufigkeitsverteilungen das fehlerhafte Werkzeug identifiziert. Dadurch, daß nun ein Komparator vorgesehen ist, welcher mit einem ersten und einem zweiten Speicher verbunden ist und dadurch, daß die Auswertung auf der Ermittlung einer Häufigkeitsverteilung basiert, wird die Zuverlässigkeit der Fehlererkennung erheblich gesteigert. Die Erkennung eines fehlerhaften Werkzeuges ist nämlich auch dann möglich, wenn das betreffende Werkzeug nicht dauerhaft ausfällt bzw. in seiner Funktion gestört ist, sondern auch dann, wenn Störungen lediglich in unregelmäßigen Abständen auftreten.

Obwohl es ausreicht eine einzige Prüfeinrichtung vorzusehen, kann die erfindungsgemäße Produktionsstraße jedoch auch so ausgebildet sein, daß wenigstens zwei Prüfeinrichtungen vorgesehen sind und daß die zwischen zwei Prüfeinrichtungen angeordneten Stationen jeweils eine voneinander verschiedene Anzahl von jeweils gleichen Werkzeugen aufweisen. Bei einer Anordnung von wenigstens zwei Prüfeinrichtungen ist es somit nicht mehr erforderlich, daß alle einer Prüfeinrichtung vorangehenden Stationen jeweils eine voneinander verschiedene Anzahl von jeweils gleichen Werkzeugen aufweisen, sondern daß lediglich die zwischen zwei Prüfeinrichtungen angeordneten Stationen jeweils eine voneinander verschiedene Anzahl von jeweils gleichen Werkzeugen aufweisen. Dadurch kann in der Auswahl der Anzahl der in einer Station vorgesehenen Werkzeuge flexibler vorgegangen werden, und eine Anpassung von bestehenden Produktionsstraßen leichter vorgenommen werden.

In besonders vorteilhafter Weise ist die Produktionsstraße so ausgebildet, daß sie einen Zähler für fehlerhafte Werkstücke aufweist, welcher mit dem Komparator verbunden ist und diesem das Erreichen einer Anzahl von fehlerhaften Werkstücken signalisiert, welche dem kleinsten gemeinsamen Vielfachen der Werkzeuge der einer Prüfeinrichtung vorangehenden bzw. zwischen zwei Prüfeinrichtungen angeordneten Stationen entspricht. Dadurch, daß die Ermittlung des fehlerhaften Werkzeuges erst dann beginnt, wenn die oben definierte Anzahl an fehlerhaften Werkstücken dedektiert wurde, wird sichergestellt, daß die sich ergebende Häufigkeitsverteilung eindeutig ist und somit in eindeutiger Weise einer bereits gespeicherten Häufigkeitsverteilung zugeordnet werden kann. Die Treffsicherheit kann naturgemäß dadurch weiter erhöht werden, daß ganzzahlige Vielfache des kleinsten gemeinsamen Vielfachen herangezogen werden.

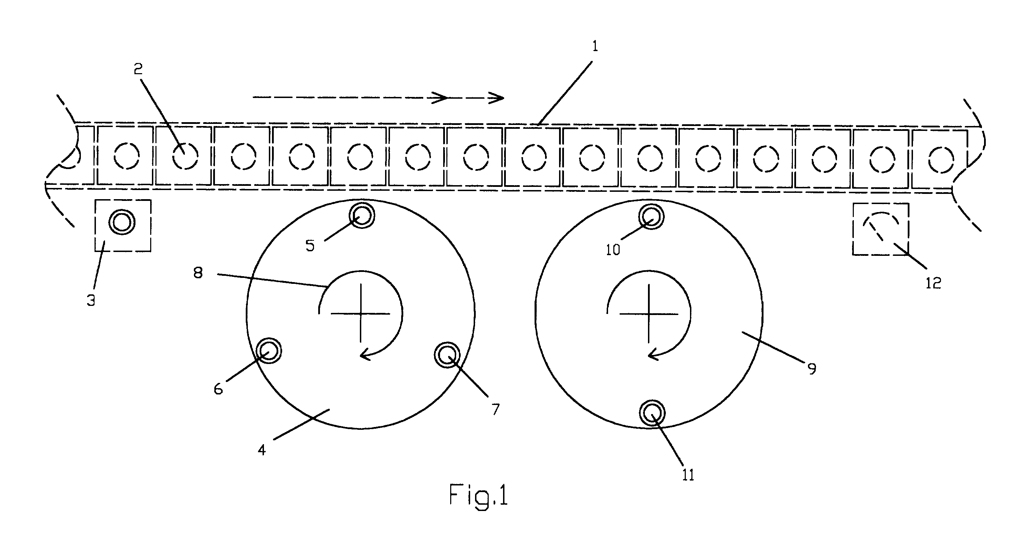

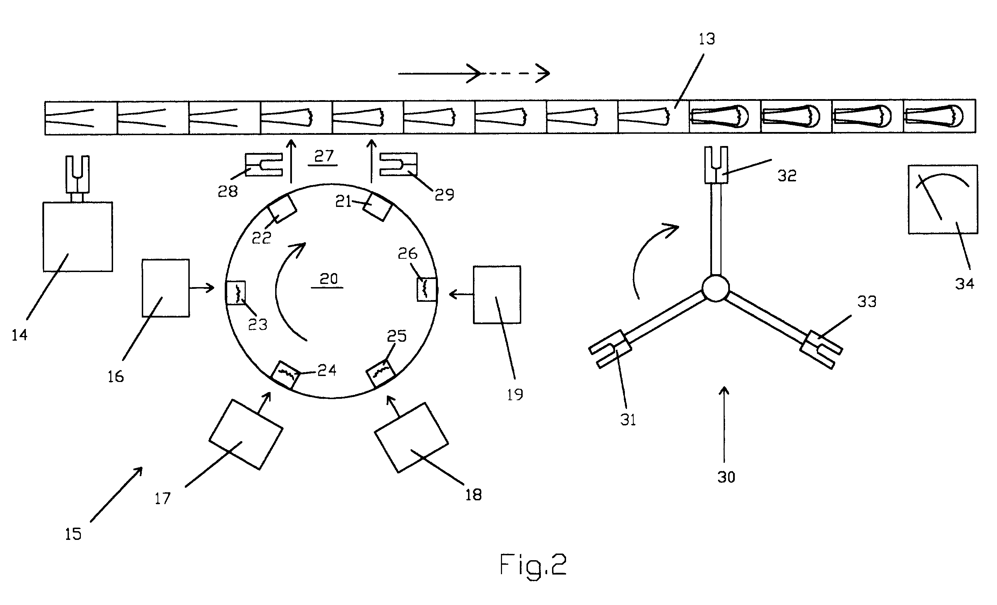

Die Erfindung wird nachfolgend anhand von in der Zeichnung dargestellten Beispielen näher erläutert. In diesen zeigt Fig. 1 einen Ausschnitt aus einer Mobiltelefonfertigung und Fig. 2 eine Produktionsstraße zur Fertigung von Glühbirnen.

Bei der Mobiltelefonfertigung müssen drei variable Bauelemente maschinell so eingestellt werden, daß ein optimaler Empfang erreicht wird. Im Falle der in Fig. 1 gezeigten Fertigungsstraße werden zwei Widerstände und ein Kondensator in getrennten Stationen auf einen optimalen Wert eingestellt. In Fig. 1 ist mit 1 ein Förderband dargestellt, mittels welchem die Produktträger 2 schrittweise vorwärts bewegt werden. Auf dem Produktträger 2 befindet sich eine nicht näher dargestellte Leiterplatte, auf der sich unter anderem zwei Widerstände mit einstellbarem Widerstandswert sowie ein einstellbarer Kondensator befinden. In der Station 3 ist nun ein Werkzeug angeordnet, welches den Wert des ersten Widerstandes einstellt. In der Station 3 ist nur ein einziges derartiges Werkzeug vorhanden, sodaß es an der Produktion jedes einzelnen Mobiltelefons beteiligt ist. In der Station 4 wird der Wert des zweiten Widerstandes eingestellt, wobei zu diesem Zweck drei gleichartige Werkzeuge 5, 6, 7 vorgesehen sind, welche jeweils abwechselnd die Einstellung des zweiten Widerstandes vornehmen. Dazu wird die Station 4 bei jedem Takt des Förderbandes um eine Drittel Umdrehung gemäß des Pfeiles 8 weitergedreht. In der Station 9 befinden sich zwei gleichartige Werkzeuge 10, 11 zur Einstellung der Kapazität, sodaß jedes Werkzeug an der Produktion jedes zweiten Werkstückes beteiligt ist. In der Meßstation 12 wird nun eine Funktionskontrolle vorgenommen, wobei es nicht notwendig ist, daß die Widerstandswerte bzw. Kapazitätswerte einzeln nachgeprüft werden. Es ist ausreichend lediglich einen charakteristischen Parameter zu prüfen, in welchen die Widerstands- bzw. Kapazitätswerte kumulativ eingehen. Bei Erkennen eines fehlerhaften Werkstückes werden die an der Produktion des betreffenden Werkstückes beteiligten Werkzeuge durch einfaches Rückzählen ermittelt und in einem Speicher abgelegt. Nach sechs fehlerhaften Werkstücken ergibt sich beispielsweise eine Häufigkeitsverteilung gemäß der nachfolgenden Tabelle:

| Position | Häufigkeit | Verhältnis |
|---|---|---|
| 1. St.(3) | 6 | 3 |
| 2. St.(4)-Wzg.(5) | 2 | 1 |
| 2. St.(4)-Wzg.(6) | 2 | 1 |
| 2. St.(4)-Wzg.(7) | 2 | 1 |
| 3. St.(9)-Wzg.(10) | 3 | 2 |
| 3. St.(9)-Wzg.(11) | 3 | 2 |

Diese Häufigkeitsverteilung ist charakteristisch für ein fehlerhaftes Werkzeug in der ersten Station 3 und ist in einem Speicher abgelegt. Durch Vergleich der ermittelten Häufigkeitsverteilung mit den gespeicherten Werten wird in einfacher Weise auf das fehlerhafte Werkzeug der ersten Station 3 geschlossen. Für ein fehlerhaftes Werkzeug 5 in der Station 4 ergibt sich eine Häufigkeitsverteilung gemäß folgender Tabelle:

| Position | Häufigkeit | Verhältnis |
|---|---|---|
| 1. St.(3) | 6 | 2 |
| 2. St.(4)-Wzg.(5) | 6 | 2 |
| 2. St.(4)-Wzg.(6) | - | - |
| 2. St.(4)-Wzg.(7) | - | - |
| 3. St.(9)-Wzg.(10) | 3 | 1 |
| 3. St.(9)-Wzg.(11) | 3 | 1 |

Für ein fehlerhaftes Werkzeug 11 in der Station 9 ergibt sich folgende Häufigkeitsverteilung:

| Position | Häufigkeit | Verhältnis |
|---|---|---|
| 1. St.(3) | 6 | 3 |
| 2. St.(4)-Wzg.(5) | 2 | 1 |
| 2. St.(4)-Wzg.(6) | 2 | 1 |
| 2. St.(4)-Wzg.(7) | 2 | 1 |
| 3. St.(9)-Wzg.(10) | - | - |
| 3. St.(9)-Wzg.(11) | 6 | 3 |

In Fig. 2 ist eine Produktionsstraße für die Fertigung einer Glühbirne gezeigt. Mit 13 ist ein Förderband bezeichnet, mit 14 eine Station, welche die Pins fertigt und sie auf den Produktträger setzt. Die Station 14 weist lediglich ein Werkzeug auf. Die Station 15 wickelt einen geeigneten Draht zu einem Glühfaden, hierzu sind vier Werkzeuge (Wickeleinrichtungen) 16, 17, 18 und 19 vorgesehen. Die Station 20 ist ein Drehtisch mit sechs Nestern 21, 22, 23, 24, 25 und 26, welche als Übertragungsmedium dienen um die Glühfäden von Station 15 zu der nachfolgenden Station 27 zu transportieren. Die Station 27 weist zwei Werkzeuge 28 und 29 auf, welche die Glühfäden aus den Nestern nehmen und diese mit den Pins verschweißen. Die Station 30 weist drei Werkzeuge 31, 32 und 33 auf, welche die Pins mit dem Glühfaden in eine Glasbirne einführen, die Glasbirne evakuieren und sie anschließend verschließen. In der Meßstation 34 wird nun eine Funktions- bzw. Qualitätskontrolle durchgeführt, wobei es hier lediglich genügt die Glühbirne an eine Spannungsquelle anzuschließen, um ihre Leuchtkraft festzustellen. Dadurch, daß die der Prüfstation vorangehenden Stationen 14, 15, 20, 27 und 30 jeweils eine voneinander verschiedene Anzahl (nämlich 1, 4, 6, 2 und 3) von jeweils gleichen Werkzeugen aufweisen, kann in der Auswerteschaltung in zum ersten Beispiel analoger Weise auf das fehlerhafte Werkzeug geschlossen werden. Die einzelnen für den Ausfall der in der ersten Zeile angeführten Werkzeuge charakteristischen Häufigkeitsverteilungen sind in der nachfolgenden Tabelle zusammengefaßt:

| Def.Wzg: | 1. St. (14) | 2. St.(15)-Wzg.(18) | 3. St.(20)-Wzg. (24) | 4. St.(27)-Wzg. (28) | 5. St.(30)-Wzg. (32) |
|---|---|---|---|---|---|
| | Häufigkeit | Häufigkeit | Häufigkeit | Häufigkeit | Häufigkeit |
| 1. St.(14) | 12 | 12 | 12 | 12 | 12 |
| 2. St.(15)-Wzg.(16) | 3 | 0 | 0 | 0 | 0 |
| 2. St.(15)-Wzg.(17) | 3 | 0 | 6 | 6 | 6 |
| 2. St.(15)-Wzg.(18) | 3 | 12 | 0 | 0 | 0 |
| 2. St.(15)-Wzg.(19) | 3 | 0 | 6 | 6 | 6 |
| 3. St.(20)-Wzg.(21) | 2 | 4 | 0 | 0 | 0 |
| 3. St.(20)-Wzg.(22) | 2 | 0 | 0 | 4 | 4 |
| 3. St.(20)-Wzg.(23) | 2 | 4 | 0 | 0 | 0 |
| 3. St.(20)-Wzg.(24) | 2 | 0 | 12 | 4 | 4 |
| 3. St.(20)-Wzg.(25) | 2 | 4 | 0 | 0 | 0 |
| 3. St.(20)-Wzg.(26) | 2 | 0 | 0 | 4 | 4 |
| 4. St.(27)-Wzg.(28) | 6 | 0 | 12 | 12 | 6 |
| 4. St.(27)-Wzg.(29) | 6 | 12 | 0 | 0 | 6 |
| 5. St.(30)-Wzg.(31) | 4 | 4 | 4 | 4 | 0 |
| 5. St.(30)-Wzg.(32) | 4 | 4 | 4 | 4 | 12 |
| 5. St.(30)-Wzg.(33) | 4 | 4 | 4 | 4 | 0 |

Insgesamt wird es durch die Erfindung möglich ohne aufwendige Diagnoseeinrichtungen und vollautomatisch ein fehlerhaftes Werkzeug innerhalb einer Produktionsstraße zu identifizieren und weiters den Betrieb der Produktionsstraße auch bei Ausfall eines Werkzeuges aufrechtzuerhalten.

## Patentansprüche

1. Verfahren zur Ermittlung eines fehlerhaften Werkzeuges in einer Produktionsstraße mit wenigstens zwei Bearbeitungsstationen dadurch gekennzeichnet, daß die Bearbeitungsstationen jeweils eine voneinander verschiedene Anzahl von jeweils gleichen Werkzeugen aufweisen, daß mittels wenigstens einer Prüfeinrichtung eine Qualitäts- bzw. Funktionskontrolle vorgenommen wird, daß bei Auftreten von fehlerhaften Werkstücken die an der Produktion dieser Werkstücke beteiligten Werkzeuge sowie deren Häufigkeiten ermittelt werden und daß durch Vergleich der ermittelten Verteilung der Häufigkeiten mit gespeicherten Häufigkeitsverteilungen auf das fehlerhafte Werkzeug geschlossen wird.

2. Produktionsstraße mit wenigstens zwei Bearbeitungsstationen mit Werkzeugen für die Produktion eines Werkstückes und wenigstens einer Prüfeinrichtung für fehlerhafte Werkstücke dadurch gekennzeichnet, daß die einer Prüfeinrichtung vorangehenden Bearbeitungsstationen jeweils eine voneinander verschiedene Anzahl von jeweils gleichen Werkzeugen aufweisen und daß die Prüfeinrichtung mit einer Auswerteschaltung verbunden ist, welche jedem Werkstück die an seiner Produktion beteiligten Werkzeuge zuordnet.

3. Produktionsstraße nach Anspruch 2 dadurch gekennzeichnet, daß der Auswerteschaltung ein erster Speicher zugeordnet ist, in welchem die Häufigkeiten und die Häufigkeitsverteilung von an als fehlerhaft erkannten Werkstücken beteiligten Werkzeugen abgelegt sind, daß ein zweiter Speicher vorgesehen ist, in welchem für den Ausfall jedes Werkzeuges jeweils eine charakteristische Häufigkeitsverteilung gespeichert ist, und daß ein Komparator mit dem ersten und dem zweiten Speicher verbunden ist, welcher bei Übereinstimmung der im ersten Speicher abgelegten Häufigkeitsverteilung mit einer der im zweiten Speicher gespeicherten Häufigkeitsverteilungen das fehlerhafte Werkzeug identifiziert.

4. Produktionsstraße nach einem der Ansprüche 2 oder 3 dadurch gekennzeichnet, daß wenigstens zwei Prüfeinrichtungen vorgesehen sind und daß die zwischen zwei Prüfeinrichtungen angeordneten Bearbeitungsstationen jeweils eine voneinander verschiedene Anzahl von jeweils gleichen Werkzeugen aufweisen.

5. Produktionsstraße nach einem der Ansprüche 3 oder 4 dadurch gekennzeichnet, daß sie einen Zähler für fehlerhafte Werkstücke aufweist, welcher mit dem Komparator verbunden ist und diesem das Erreichen einer Anzahl von fehlerhaften Werkstücken signalisiert, welche dem kleinsten gemeinsamen Vielfachen der Werkzeuge der einer Prüfeinrichtung vorangehenden bzw. zwischen zwei Prüfeinrichtungen angeordneten Bearbeitungsstation entspricht.

6. Verwendung einer Zähleinrichtung für fehlerhafte Werkstücke und Ermittlung von an der Produktion dieser fehlerhaften Werkstücke beteiligten Werkzeugen zur Ermittlung des defekten Werkzeuges bzw. der defekten Werkzeuge für die Produktion eines Werkstückes.
